# EUROPEAN PATENT SPECIFICATION

(11) **EP 0 612 938 B1**
(45) Date of publication and mention of the grant of the patent: **16.04.1997**
(21) Application number: 94850028.5
(22) Date of filing: 21.02.1994
(51) Int. Cl.: F16H 57/04, F16N 39/06

(54) **Device for a gearbox for filtering or cooling of the lubricant**
Getriebe mit einer Einrichtung zum Filtern oder Kühlen des Schmiermittels
Dispositif d'une boîte de vitesse pour filtrer ou refroidir le lubrifiant

(30) Priority: 22.02.1993 SE 9300565
(43) Date of publication of application: 31.08.1994
(73) Proprietor: SCANIA CV AKTIEBOLAG, S-151 87 Södertälje (SE)
(72) Inventor: Dahlbäck, Marten, S-181 60 Lidingö (SE); Fintling, Henrik, S-151 47 Södertälje (SE)

(56) References cited:
- US-A- 3 847 249
- US-A- 4 352 301
- PATENT ABSTRACTS OF JAPAN vol. 8, no. 83 (M-290) (1520) 17 April 1984 & JP-A-59 001 870 (NISSAN JIDOSHA)

## Description

This invention relates to a device for a gear according to the preamble to patent claim 1.

### State of the art.

The gears, for example gears in motor vehicles, which are currently available are in most cases lubricated by so-called splash lubrication. This means that the gear housing has an oil sump which is partially filled with oil so that at least one gearwheel is at least partially immersed in the oil. During operation the gearwheel rotates and oil is therefore splashed up from the sump, providing the required lubrication.
The solution causes the oil to become increasingly contaminated the longer the gear is in operation, which in turn gives rise to increased wear. In order to reduce this wear, and hence increase the life of the gear, the oil is changed at suitable intervals during the life of the gear.

One method of extending the life of the gear still further is to arrange a filter on the gear for the purpose of continuously cleaning the oil. This is now done today, for example, in some vehicle gearboxes. Such a solution may even allow a longer operating time between the required services, which are both expensive and time-consuming.
However, such a solution means that the oil must be pumped through the filter by means of a pumping device, which imposes a more expensive and more complicated gear design.

In the case of central gears arranged on the drive shaft of the motor vehicle the problem is particularly serious because in most cases splash lubrication only is used, without any form of filtration.

DE-A-40 23 354 shows a solution in which the crownwheel of the central gear throws up oil to a reservoir arranged inside the gear housing. The oil is then fed down from the reservoir via pipes for lubricating parts difficult to reach, such as hub bearings, from which the oil returns to the oil sump. According to the solution kinetic energy from the crownwheel is converted by the displacement of the oil to potential energy to allow lubrication. Filtration or other reconditioning means are not mentioned in that DE-A 40 23 354.

The reasoning set out above also applies to types of lubricating oil reconditioning other than filtration, for example cooling of the oil by allowing it to be fed through an external cooling pipe.

JP-A 590 018 70 shows a design for cooling the lubricating oil of a gear box and comprises the features outlined in the preamble of claim 1. The kinetic energy of a crown wheel is used for feeding the oil through an external cooling circuit. The inlet of the circuit is located near the periphery of the crownwheel, and the outlet quite far away from the inlet at a location where the oil pressure is low. The design has two different mounting locations of the inlet and outlet. The long distance between the inlet and outlet will also involve a large pressure drop over the external circuit.

DE-A 31 16 595 shows a solution for cooling the lubricating oil for the central gear of a vehicle. The solution provides a cooling pipe arranged partly inside and partly outside the gear housing. The cooling housing is closed and contains a coolant for cooling the lubricating oil.

### Objective of the invention.

The objective of this invention is to provide, by simple means, a solution for reconditioning the lubricating oil for a gear without requiring to make major, expensive modifications to the gearbox design.
For this purpose the device according to the invention is characterised by the features described in the characterising part of the main claim.
By designing the gear housing with ducts for feeding lubricating oil to the reconditioning unit and back and with an inlet and an outlet at a mounting section only minor modifications need be made to a conventional gear housing to provide reconditioning of the oil. The duct feeding lubricant to the reconditioning unit has an inlet in the vicinty, and directed along the periphery, of the gearwheel. The losses in flow energy are thereby reduced to a minimum.

In one embodiment the filter, or other reconditioning unit, is fixed to the gear housing by a connecting unit arranged so that it can be mounted separately, incorporating ducts for feeding the oil between the gear housing and the filter.

This design is particularly advantageous in the central gear of a motor vehicle where the crownwheel can be used as a source of energy.

The additional features and advantages of the device according to the invention are indicated in the attached description of an embodiment where reference is made to the attached figures, in which numerical references denote mutually corresponding parts.

### Brief description of the drawings.

- Figure 1: shows a diagrammatic side view of a road vehicle with a central gear fitted with the device according to the invention.
- Figure 2: shows an enlarged view of the device according to the invention, essentially divided into sections in a longitudinal vertical plane of the vehicle, represented in Figure 3 by II-II.
- Figure 3: shows an enlarged elevation of the device along Section III-III in Figure 2.
- Figure 4: shows a perspective view of a connecting unit according to the invention.

### Description of an embodiment.

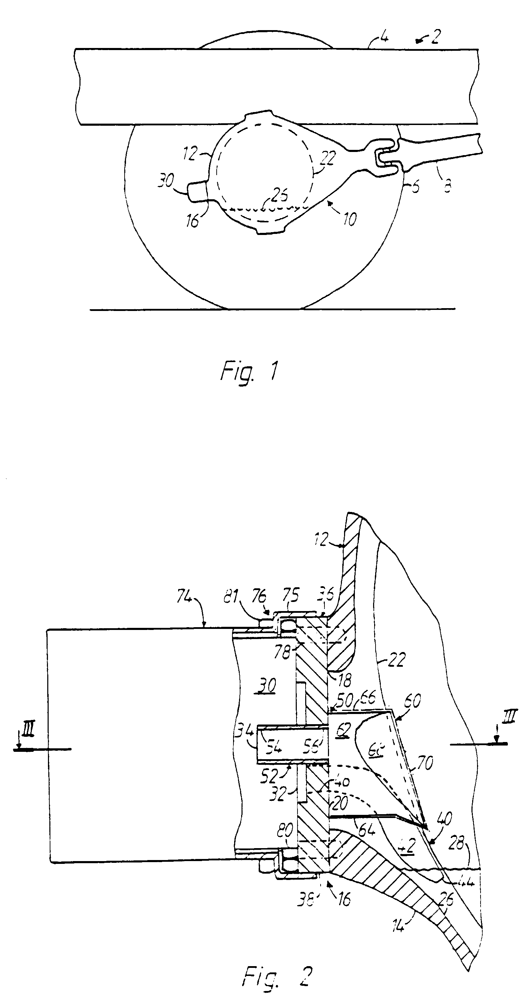

Figure 1 shows the rear section of a vehicle frame 4, here belonging to a truck 2. The driving force of truck 2 is generated conventionally in a drive unit not shown here, for example a diesel engine, and is transmitted rearwards via a propeller shaft arrangement in the forward direction of the vehicle to a gear 10 in the form of a central gear incorporating, among other things, a gear housing 12 and a gearwheel 22, here in the form of a crownwheel. Crownwheel 22 is conventionally connected, so that it transmits torsional force, to the drive shaft (not shown here) via a differential (not shown here), and its task is to transmit the torque from propeller shaft 8 to the drive shaft and the drive wheels 6 arranged on it (only one shown here). During travel crownwheel 22, shown in Figure 1, therefore rotates clockwise if a forward gear is engaged and anticlockwise if a reversing gear is engaged.

Central gear 10 is lubricated with oil from an oil sump 26 in the bottom of gear housing 12 by splash lubrication. The lubricating oil is filtered when the rotary crownwheel 22, during forward travel, throws up lubricating oil which is fed through a mounting section 16 arranged in the rear half of gear housing 12, for an external oil filter 30. After passing through oil filter 30 the oil is returned to gear housing 12.
If required filter 30 may be replaced by any other reconditioning unit, for example a venting unit or an oil cooling pipe.

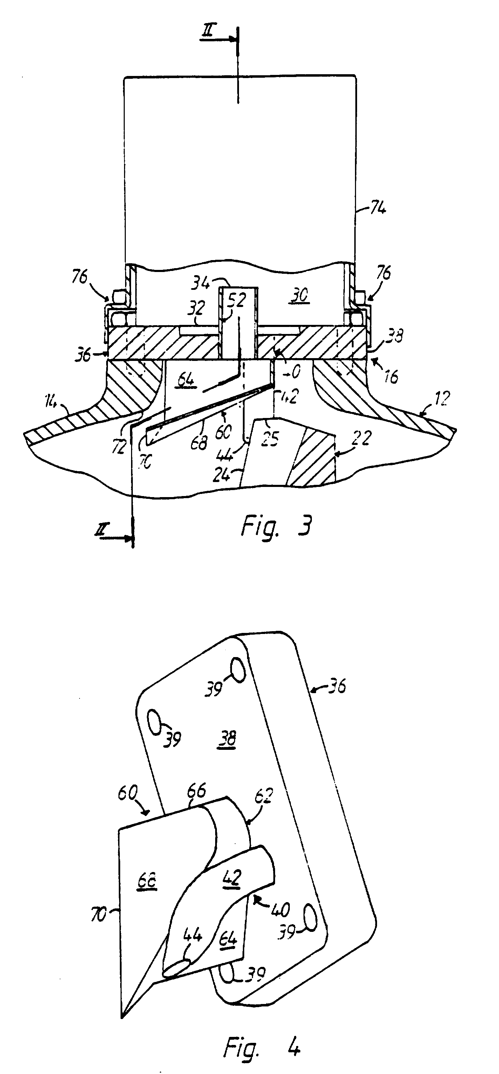

Figures 2 and 3 show sectional views of the rear section of gear housing 12, oil filter 30 and parts of crownwheel 22. Figure 2 only shows the peripheral line of crownwheel 22, and Figure 3 shows an incorporated tooth 24.

Oil filter 30 is of prior art and is secured to a mounting section 16 of gear housing 12. Mounting section 16 here consists of a connecting unit 36 which is arranged so that it can be separately assembled. Oil filter 30 is essentially cylindrical in shape and has a central oil outlet 34 and an external oil inlet 32 coaxial to oil outlet 34.

Connecting unit 36 is secured to a rearwardly directed hole 18 through wall 14 of gear housing 12. Gear housing 12 has an essentially flat contact surface 20 facing connecting unit 36 located in an essentially vertical plane perpendicular to the forward direction of the vehicle.
Connecting unit 36, which is also shown separately in Figure 4, incorporates as its essential components a fixing plate 38, a duct 40, referred to in the following as an inlet duct, designed to feed lubricating oil from gear housing 12 to oil filter 30, and a connection 50, here designed as a second duct 50 and hereinafter referred to as an outlet duct, designed to feed the lubricating oil back to gear housing 12.
Inlet duct 40 consists both of a pipe section 42, with an inlet 44 located in the vicinity of the periphery of crownwheel 22, at a point in the vicinity of and preferably below the surface 28 of the oil in oil sump 26, and of a hole 46 passing through fixing plate 38, which hole leads to an outlet section 48 designed as a circular groove designed to enable oil to be fed along the entire surface of oil inlet 32 of filter 30. Inlet duct 40 is essentially continuously rising from inlet 44 to outlet 48.
Outlet duct 50 consists both of a cylindrical, externally threaded pipe 52 and of a control cover 60. Pipe 52 has an inlet section 54 securely threaded on to oil outlet 34 of oil filter 30, and an outlet section 56 securely threaded in a hole 58 designed for this purpose and passing through connecting unit 36. The most important task of control cover 60 is to prevent oil thrown up by the crownwheel from being fed into oil filter 30 via outlet duct 50.

Oil filter 30 is securely threaded to pipe 52, and is therefore fixed to connecting unit 36, which is in turn secured to gear housing 12 by means of a number of fastening elements 76, here four stud bolts 78 with a first set of interacting nuts 80 and holes 23 passing through connecting unit 36. Fixing elements 76 also secure a protective cap 74 to gear housing 12 with a second set of nuts 81. The task of protective cap 74 is to protect oil filter 30 from dirt and any other influence, e.g. objects from the road surface.

Connecting unit 36 may consist of a first part containing pipe section 42 of inlet duct 40, control cover 60 and a thin part of fixing plate 38, cast in plastic, and a second part containing the rest of fixing plate 38, of metal. Alternatively the parts mentioned may consist of a single plastic or metal part cast in one piece. As an alternative embodiment pipe section 42 and control cover 60 can be welded to fixing plate 38. Connecting unit 36 may be designed according to further alternative forms, enabling its component parts to assume shapes other than those described in this description, depending among other things on the choice of production method.

Inlet 44 of inlet duct 40 is located in the vicinity of the periphery of crownwheel 22, preferably at a distance of only a few millimetres from it, at a point below and in the vicinity of surface 28 of the lubricating oil. Inlet 44 is directed in the tangential direction of crownwheel 22, and the pipe section 42 is rising and slightly bent throughout its extension, all this to ensure the smallest possible losses in flow energy through inlet duct 40. The design of the inlet 44 is selected so that the oil flow into the inlet 44 has an essentially tangential direction of the crownwheel 22. Pipe section 42 should also have a relatively large diameter for the purpose of reducing the laminar flow losses.
The optimum area of inlet 44 does not depend on the diameter of pipe section 42 but is determined by the pressure drop of the system. A small inlet area gives rise to a high static pressure with a low flow rate, whilst a larger area gives rise to a lower static pressure but a higher flow rate, provided that there is no drop in pressure. In practice, however, there is always a certain pressure drop over filter 30, due among other things to its degree of blocking. In order to obtain a predetermined filtration efficiency a certain minimum pressure is required towards the inlet area, which should therefore be as large as possible without the pressure dropping below this minimum value. The efficiency is defined as volume of flow per unit of time, i.e. flow, and is dependent on certain conditions such as oil quality, oil temperature, the speed of rotation of crownwheel 22 and pressure drop over filter 30, which in turn depends, as already mentioned, on the degree of blocking, among other things. The area of inlet 44 can therefore be adapted to give a flow through oil filter 30 which corresponds to a predetermined efficiency under predetermined conditions.
In order to obtain as favourable a flow pattern as possible around the inlet, inlet 44 should also be located a sufficient distance from gear housing wall 14 so that the quantity of oil whose flow pattern is influenced by wall 14 is not fed into inlet duct 40. Tests have shown that the highest flow through inlet duct 11 is obtained when inlet 44 is positioned laterally and essentially opposite outer tooth edge 25 of crownwheel 22, which is shown most clearly in Figure 3.

Control cover 60 of outlet duct 50 has two tasks, firstly to feed the filtered oil to a point in gear housing 12 where it is not fed immediately back into inlet duct 40, this to prevent the same limited quantity of oil from being continually fed through oil filter 30, and secondly to prevent lubricating oil thrown up by crownwheel 22 from being fed into oil filter 30 through outlet duct 50. Control cover 60 therefore contains a first wall section 62, which may be said to consist of a floor section 64 and a roof section 66, where the floor section 64 prevents oil from being fed "the back way" through oil filter 30. Control cover 60 also contains a second wall section 68, directed mainly in a vertical plane, whose outer edge 70 has a slightly longer extension than floor section, whereby the oil is guided through a gap 72, which may be said to constitute an outlet, between this outer edge 70 and gear housing wall 14, so that the oil is thrown in the direction away from the inlet 44 of inlet duct 40.

The device described above can be assembled by the following method:

Oil filter 30 is first bolted on to connecting unit 36 at externally threaded pipe 52, whereupon connecting unit 36 is fitted to stud bolts 78 tightened in gear housing 12, and secured with the first set of nuts 80. Protective cap 74 is then fitted and secured to gear housing 12 by means of the second set of nuts 81. Protective cap 74 is suitably provided with a section 75 partially projecting from fixing plate 38, for improved sealing. For further improved sealing properties the first set of nuts 80 can be recessed in fixing plate 38.
When the filter is changed protective cap 74 is removed, whereupon oil filter 30 can be removed and replaced without the need for removing connecting unit 36, which reduces the risk of dirt penetrating gear housing 12.

As mentioned earlier it is advantageous if inlet 44 of inlet duct 40 is located as close to crownwheel 22 as possible. The relatively wide tolerances provided in central gears, and also the choice of crownwheel, may give rise to variations in the distance between the periphery of crownwheel 22 and wall 14 of gear housing 12. To obtain an optimum distance between crownwheel 22 and inlet 44 a number of spacers can be positioned between flat section 38 of connecting unit 36 and contact surface 20 of gear housing 12. According to an alternative design pipe section 42 of inlet duct 40 can be separated from fixing plate 38 and during assembly pressed on to a pipe connector fixed to fixing plate 38 until the desired position between crownwheel 22 and inlet 44 is achieved.

According to the embodiment described above the lubricating oil can only be filtered when the vehicle is travelling forward, and at a minimum speed. However, tests have shown that despite this sufficient filtration is achieved in most types of load cases found in different types of trucks, due among other things to the fact that the vehicles frequently driven at low speed are provided with such a gear reduction, e.g. by means of hub gears, that the peripheral speed of the crownwheel is largely the same as in faster vehicles.
In applications where the crownwheel or gear unit also rotates in the other direction for a large proportion of the operating time, a further device according to the invention can be positioned on the opposite side of the gear housing, which enables the lubricating oil to be filtered in both directions of rotation.
In applications without a crownwheel or where it is unsuitable to use the crownwheel, any other gearwheel part of the transmission can be used.

As is evident from the above description only minor modifications to an existing central gear housing need be made to enable the vehicle to be equipped with the device according to the invention. Furthermore, a gear housing prepared for the device, and therefore provided with hole 18, but where the filtration device is not required for some reason, can be easily adapted to this by sealing the hole with a cover instead of fitting a connecting unit.

The device according to the invention can also be used for types of lubricating oil reconditioning other than filtration, e.g. cooling or venting.

## Claims

1. Device for a gear (10), comprising a gear housing (12) partially filled with lubricant, and at least one external unit (30) fixed to the gear housing (12), through which unit (30) the lubricant is conveyed for reconditioning, whereby the energy required for the conveying is obtained by transmission of kinetic energy from a gearwheel (22) to the lubricant by means of direct interaction between said gearwheel (22) and the lubricant, wherein a duct (40) is arranged for conveying lubricant to the external unit (30), which duct has an inlet (44) located in the vicinity of the periphery of the gearwheel (22), which inlet (44) has a direction such that the lubricant flow into the inlet (44) has an essentially tangential direction of the gearwheel (22), and a connection (50) is arranged for conveying lubricant from the external unit (30) to the gear housing (12),
**characterised** in that the external unit (30) is mounted to a mounting section (16) comprising the duct (40) and the connection (50).

2. Device according to claim 1, **characterised** in that the mounting section (16) consists of a separately assembled connecting unit (36) arranged on the gear housing.

3. Device according to one of claims 1-2, **characterised** in that the external unit (30) is an oil filter.

4. Device according to one of claims 1-3, **characterised** in that the area of the inlet (44) is of such a size that the pressure generated by the kinetic energy mentioned will provide a flow through the unit (30) causing at least a predetermined reconditioning action.

5. Device according to one of claims 1-4, **characterised** in that the inlet (44) is located in the vicinity of the surface (28) of the lubricant.

6. Device according to one of claims 1-5, **characterised** in that the connection (50) consists of a second duct (50) with an outlet (72) located above the surface (28) of the lubricant.

7. Device according to one of claims 1-6, **characterised** in that the gearwheel (22) is a crownwheel.

8. Device according to one of claims 1-7, **characterised** in that the gear (10) is a central gear for a vehicle.

## Patentansprüche

1. Anordnung an einem Getriebe (10) mit einem Getriebegehäuse (12), das teilweise mit Schmiermittel gefüllt ist, und mindestens einer externen Einheit (30), die am Getriebegehäuse (12) befestigt ist, wobei das Schmiermittel zur Wiederaufbereitung durch die Einheit (30) hindurchbewegt wird und die dazu erforderliche Energie durch Übertragung kinetischer Energie von einem Zahnrad (22) auf das Schmiermittel mittels direkten Zusammenwirkens zwischen dem Zahnrad (22) und dem Schmiermittel erhalten wird, wobei zum Befördern des Schmiermittels zur externen Einheit (30) eine Leitung (40) angeordnet ist, die einen in der Nachbarschaft der Peripherie des Zahnrades (22) angeordneten Einlaß (44) aufweist, welcher eine solche Richtung hat, daß der Schmiermittelstrom in den Einlaß (44) eine zum Zahnrad (22) im wesentlichen trangentiale Richtung hat, und eine Verbindung (50) vorgesehen ist, um Schmiermittel von der externen Einheit (30) in das Getriebegehäuse (12) zu fördern,
dadurch gekennzeichnet, daß die externe Einheit (30) an einen Anbaukörper (16) angebaut ist, der die Leitung (40) und die Verbindung (50) aufweist.

2. Anordnung nach Anspruch 1,
dadurch gekennzeichnt, daß der Anbaukörper (16) aus einer gesondert zusammengebauten und an dem Getriebegehäuse angeordneten Verbindungseinheit (36) besteht.

3. Anordnung nach einem der Ansprüche 1 oder 2,
dadurch gekennzeichnet, daß die externe Einheit (30) ein Ölfilter ist.

4. Anordnung nach einem der Ansprüche 1 bis 3,
dadurch gekennzeichnet, daß die Fläche des Einlasses (44) von solcher Größe ist, daß der von der erwähnten kinetischen Energie erzeugte Druck eine Strömung durch die Einheit (30) hervorruft, welche zumindest eine vorbestimmte Wiederaufbereitung bewirkt.

5. Anordnung nach einem der Ansprüche 1 bis 4,
dadurch gekennzeichnet, daß der Einlaß (44) in der Nachbarschaft der Oberfläche (28) des Schmiermittels angeordnet ist.

6. Anordnung nach einem der Ansprüche 1 bis 5,
dadurch gekennzeichnt, daß die Verbindung (50) aus einer zweiten Leitung mit einem Auslaß (72) besteht, welcher über der Oberfläche (28) des Schmiermittels angeordnet ist.

7. Anordnung nach einem der Ansprüche 1 bis 6,
dadurch gekennzeichnet, daß das Zahnrad (22) ein Kronrad ist.

8. Anordnung nach einem der Ansprüche 1 bis 7,
dadurch gekennzeichnet, daß das Zahnrad (10) ein Zentralrad für ein Fahrzeug ist.

## Revendications

1. Dispositif pour un engrenage (10), comportant un carter d'engrenage (12) en partie rempli d'un lubrifiant, et au moins une unité externe (30) fixée au carter d'engrenage (12), le lubrifiant étant acheminé à travers ladite unité (30) en vue d'une régénération, l'énergie requise pour l'acheminement étant alors obtenue par transmission d'une énergie cinétique d'une roue d'engrenage (22) au lubrifiant par l'intermédiaire d'une interaction directe entre ladite roue d'engrenage (22) et le lubrifiant, dans lequel un conduit (40) est prévu pour acheminer le lubrifiant jusqu'à l'unité externe (30), ce conduit comportant une entrée (44) disposée au voisinage de la périphérie de la roue d'engrenage (22), ladite entrée (44) étant orientée dans une direction telle que l'écoulement du lubrifiant dans l'entrée (44) présente une direction essentiellement tangentielle à la roue d'engrenage (22), et un raccordement (50) est prévu pour acheminer le lubrifiant de l'unité externe (30) au carter d'engrenage (12), caractérisé en ce que l'unité externe (30) est montée sur une section de montage (16) comportant le conduit (40) et le raccordement (50).

2. Dispositif selon la revendication 1, caractérisé en ce que la section de montage (16) est constituée d'une unité de raccordement assemblée séparément (36) disposée sur le carter d'engrenage.

3. Dispositif selon l'une des revendications 1-2, caractérisé en ce que l'unité externe (30) est un filtre à huile.

4. Dispositif selon l'une des revendications 1-3, caractérisé en ce que l'aire d'ouverture de l'entrée (44) est d'une dimension telle que la pression engendrée par l'énergie cinétique mentionnée assurera un écoulement à travers l'unité (30) en provoquant au moins une action prédéterminée de régénération.

5. Dispositif selon l'une des revendications 1-4, caractérisé en ce que l'entrée (44) est disposée au voisinage de la surface (28) du lubrifiant.

6. Dispositif selon l'une des revendications 1-5, caractérisé en ce que le raccordement (50) est constitué d'un second conduit (50) ayant une sortie (72) disposée au-dessus de la surface (28) du lubrifiant.

7. Dispositif selon l'une des revendications 1-6, caractérisé en ce que la roue d'engrenage (22) est une couronne d'entraînement.

8. Dispositif selon l'une des revendications 1-7, caractérisé en ce que l'engrenage (10) est un engrenage central pour un véhicule.
